# EUROPÄISCHE PATENTANMELDUNG

(11) **EP 1 411 373 A2**
(43) Veröffentlichungstag der Anmeldung: **21.04.2004**
(21) Anmeldenummer: 03018162.2
(22) Anmeldetag: 08.08.2003
(51) Int. Cl.: G01V 3/10

(54) **Vorrichtung und Verfahren zur Detektion metallischer Objekte**

(30) Priorität: 18.10.2002 DE 10248714
(71) Anmelder: FIRMA ING. KLAUS EBINGER, D-51149 Köln (DE)
(72) Erfinder: Günnewig, Augustinus, 50733 Köln (DE); Ebinger, Klaus Joachim, 51143 Köln (DE)
(74) Vertreter: Heim, Hans-Karl, Dipl.-Ing.

(57) **Zusammenfassung**

Die Erfindung betrifft eine Vorrichtung zur Detektion metallischer Objekte, insbesondere in Schuhen, mit mindestens einer Sendespule (20) zum Aussenden eines elektromagnetischen Signals und mit mindestens einer ersten und einer zweiten Empfangsspule (30,40) zur Aufnahme von Sekundärsignalen, die von eventuell vorhandenen metallischen Objekten abgegeben werden. Aufgabe der Erfindung ist es, eine Vorrichtung der genannten Art bereitzustellen, welche einen besonders zuverlässigen Nachweis von metallischen Objekten in Schuhen ermöglicht. Diese Aufgabe wird bei einer gattungsgemäßen Vorrichtung dadurch gelöst, dass ein Flächenbereich der ersten Empfangsspule einen ersten Trittbereich für einen ersten Schuh einer Person bildet und dass ein Flächenbereich der zweiten Empfangsspule einen zweiten Trittbereich für einen zweiten Schuh der Person bildet. Die Erfindung betrifft außerdem ein Verfahren zur Detektion metallischer Objekte, insbesondere in Schuhen.

## Beschreibung

Die Erfindung betrifft eine Vorrichtung zur Detektion metallischer Objekte nach dem Oberbegriff des Anspruchs 1 und ein Verfahren zur Detektion metallischer Objekte nach dem Oberbegriff des Anspruchs 14.

Eine gattungsgemäße Vorrichtung weist mindestens eine Sendespule zum Aussenden eines elektromagnetischen Signals und mindestens eine erste und eine zweite Empfangsspule zur Aufnahme von Sekundärsignalen auf, die von eventuell vorhandenen metallischen Objekten abgegeben werden. Bei einem gattungsgemäßen Verfahren wird ein als Differenzmesser arbeitender Metalldetektor mit mindestens einer ersten und einer zweiten Empfangsspule eingesetzt.

Die Wirkungsweise solcher Geräte besteht.darin, dass von der Sonde ein elektromagnetisches Wechselfeld oder auch kurze elektromagnetische Pulse ausgesandt werden, die in den metallischen Suchobjekten Wirbelströme induzieren.. Diese Wirbelströme bewirken die Abstrahlung eines Sekundärfelds, welches als Ortungssignal von der Sonde detektiert wird.

Solche Vorrichtungen und Verfahren werden in der Sicherheitstechnik bei der Suche von metallischen Gegenständen, insbesondere von Waffen, eingesetzt. Besondere Bedeutung kommt der Suche nach metallischen Gegenständen bei Sicherheitskontrollen im Flugverkehr im Rahmen der Terrorismusbekämpfung zu. Hierbei muss mit möglichst hoher Zuverlässigkeit verhindert werden, dass von den Passagieren als Waffen verwendbare metallische Gegenstände, insbesondere Schusswaffen, an Bord eines Flugzeugs gebracht werden.

Zwar können mit den bekannten gattungsgemäßen Verfahren und Vorrichtungen, wie sie beispielsweise in der DE 36 19 308 C2 beschrieben sind, prinzipiell auch am Körper verborgene metallische Gegenstände mit hoher Zuverlässigkeit aufgespürt werden. Gleichwohl gab es in der Vergangenheit Fälle, bei denen in den Schuhen verborgene Waffen oder Waffenteile bei den Sicherheitskontrollen nicht nachgewiesen wurden. Ein Grund hierfür könnte die aufwendige Anwendung von Handsonden bei der Untersuchung des Unterschenkel- und Fußbereichs einer Testperson sein.

**Aufgabe** der vorliegenden Erfindung ist es, eine gattungsgemäße Vorrichtung und ein gattungsgemäßes Verfahren anzugeben, bei dem in den Schuhen einer Person verborgene Metallgegenstände mit hoher Zuverlässigkeit detektiert werden können.

Diese Aufgabe wird durch die Vorrichtung mit den Merkmalen des Anspruchs 1 sowie durch das Verfahren mit den Merkmalen des Anspruchs 14 gelöst.

Bevorzugte Weiterbildungen der erfindungsgemäßen Vorrichtung und vorteilhafte Ausgestaltungen des erfindungsgemäßen Verfahrens sind Gegenstand der Unteransprüche.

Eine Vorrichtung der oben angegebenen Art: ist erfindungsgemäß dadurch weitergebildet, dass ein Flächenbereich der ersten Empfangsspule einen ersten Trittbereich für einen ersten Schuh einer Person bildet und dass ein Flächenbereich der zweiten Empfangsspule einen zweiten Trittbereich für einen zweiten Schuh der Person bildet.

Als Kerngedanke der Erfindung kann angesehen werden, dass die Empfangsspulen so angeordnet sind, dass die Füße einer Testperson mit Schuhen in bequemer Weise im Erfassungsbereich der Empfangsspulen positioniert werden können.

Als Vorteil ergibt sich daraus, dass Sekundärsignale aus dem Bereich der Füße und Schuhe und damit auch eventuell in den Schuhen verborgene metallische Gegenstände besonders zuverlässig nachgewiesen werden können. Ein manuelles Abtasten des Unterschenkel- und Fußbereichs mit einer Hand-sonde kann daher ebenso entfallen wie eventuell im Hinblick auf die Untersuchung des Unterschenkel- und Füßbereichs vorzunehmende Einstellungsänderungen einer Ganzkörpersonde.

Insgesamt kann mit der erfindungsgemäßen Vorrichtung und dem erfindungsgemäßen Verfahren bei bequemer und unaufwendiger Bedienung ein besonders zuverlässiger Nachweis von metallischen Gegenständen in Schuhen von Testpersonen erreicht werden.

Bevorzugt ist die Sendespule so angeordnet, dass der erste und der zweite Trittbereich gleichförmig mit dem Sendesignal beaufschlagbar sind. Dadurch wird zum einen erreicht, dass die Nachweisempfindlichkeit für metallische Gegenstände für den linken und rechten Schuhbereich gleich groß ist. Darüber hinaus kann, wenn außerdem die erste und die zweite Empfangsspule zueinander symmetrisch angeordnet sind, in konstruktiv unaufwendiger Weise eine Vorrichtung realisiert werden, bei der Asymmetrien metallischen Ursprungs zwischen den beiden Schuhen detektierbar sind.

Die Detektion solcher Asymmetrien ist bereits ausreichend, wenn metallische Gegenstände nicht symmetrisch im linken und rechten Schuh verborgen werden.

Bei einer weiteren bevorzugten Ausgestaltung ist die erste Empfangsspule so angeordnet, dass von ihr im Wesentlichen Signale aus dem ersten Trittbereich erfassbar sind und/oder die zweite Empfangsspule ist so angeordnet, dass von ihr im Wesentlichen Signale aus dem zweiten Trittbereich erfassbar sind. Bei einer solchen Anordnung der Empfangsspulen können die nachgewiesenen Sekundärsignale dem Bereich des linken bzw. rechten Schuhs praktisch eindeutig zugeordnet,werden.

Eine weitere Erhöhung der Nachweisempfindlichkeit kann erzielt werden, wenn die Empfangsspulen und/oder die Sendespulen im Wesentlichen parallel zu den Trittflächen angeordnet sind.

Asymmetrien der nachgewiesenen Sekundärsignale, insbesondere Asymmetrien metallischen Ursprungs, können in besonders einfacher Weise nachgewiesen werden, wenn mindesten zwei.der Empfangsspulen, insbesondere die erste und die zweite Empfangsspule, als Differenzmesser geschaltet sind.

Darüber hinaus können Asymmetrien der nachgewiesenen Sekundärsignale aber auch bei einer Weiterbildung der erfindungsgemäßen Vorrichtung festgestellt werden, bei. der mindestens eine der Empfangsspulen, insbesondere die erste und/oder die zweite Empfangsspule, auch als Sendespule. schaltbar und einsetzbar ist. Zum Beispiel kann die erste Empfangsspule als Sendespule eingesetzt und die induzierten Sekundärsignale mit Hilfe der zweiten Empfangsspule nachgewiesen werden und umgekehrt. Durch Vergleich der nacheinander von der zweiten bzw. der ersten Empfangsspule nachgewiesenen Sekundärsignale kann auf diese Weise eine Asymmetrie festgestellt werden. Prinzipiell kann auch die Sendespule als Empfangsspule geschaltet sein.

Sofern eine genauere Lokalisierung von eventuell verborgenen metallischen Objekten gewünscht ist, können zur Detektion von Asymmetrien in einem einzelnen Schuh weitere Empfangsspulen vorgesehen sein, die so angeordnet sind, dass Sekundärsignale aus einem Teilbereich des ersten Trittbereichs oder des zweiten Trittbereich erfassbar sind.

Bei einer Anordnung mit zwei symmetrisch zueinander angeordneten Empfangsspulen, die als Differenzmesser geschaltet sind, kann prinzipiell eine Situation entstehen, bei der in den beiden Schuhen verborgene metallische Gegenstände, die ebenfalls symmetrisch angeordnet sind, nicht nachgewiesen werden können. Um auch dann das Vorhandensein dieser metallischen Gegenstände zuverlässig nachweisen zu können, kann mindestens eine weitere Empfangsspule vorgesehen sein, die so angeordnet ist, dass Sekundärsignale aus einem Bereich außerhalb des ersten und des zweiten Trittbereichs erfassbar sind.

Grundsätzlich kann aber bei einer symmetrischen Anordnung von metallischen Gegenständen im linken und rechten Schuh ein zuverlässiger Nachweis auch dadurch erzielt werden, dass die Testperson veranlasst wird, die Vorrichtung zunächst nur mit einem Fuß zu betreten.

Um bei ein und derselben Testperson reproduzierbare Ergebnisse und/oder bei unterschiedlichen Testpersonen vergleichbare Ergebnisse zu erzielen, ist es erforderlich, dass die Schuhe der Testpersonen in reproduzierbarer Weiseauf den Trittbereichen positioniert werden. Hierzu kann eine Positioniereinrichtung vorgesehen sein, welche zweckmäßig als mindestens ein Anschlagelement ausgebildet ist. Solche Anschlagselemente, die insbesondere verschiebbar ausgebildet sein können, können prinzipiell an jeder Seite der zu untersuchenden Schuhe vorgesehen sein, wobei aber ein zwischen den beiden Trittbereichen angeordnetes Anschlagselement ausreichen kann.

Bei einer besonders zweckmäßigen Ausgestaltung ist die erfindungsgemäße Vorrichtung im Bodenbereich eines Durchgangs einer Torsonde angeordnet. Die Sende- und Empfangsspulen der erfindungsgemäßen Vorrichtung können dann von einer Steuer- und Auswerteeinrichtung der Torsonde angesteuert bzw. ausgelesen werden, so dass eine separate Steuer- und Auswerteelektronik für die erfindungsgemäße Vorrichtung nicht notwendig ist.

Das Verfahren der oben angegebenen Art ist erfindungsgemäß dadurch weitergebildet, das eine Trittfläche eines ersten Schuhes einem Flächenbereich der ersten Empfangsspule zugeordnet wird, dass eine Trittfläche eines zweiten Schuhes einem Flächenbereich der zweiten Empfangsspule zugeordnet wird und dass die von dem ersten Schuh und dem zweiten Schuh ausgesandten Sekundärsignale erfasst und ausgewertet werden.

Das erfindungsgemäße Verfahren beruht auf dem vorstehend im Zusammenhang mit der erfindungsgemäßen Vorrichtung erläuterten Kerngedanken und es werden ebenfalls die dort beschriebenen Vorteile erzielt.

Das erfindungsgemäße Verfahren kann insbesondere mit der oben beschriebenen Vorrichtung durchgeführt werden.

Weitere Vorteile und. Eigenschaften der erfindungsgemäßen. Vorrichtung und des erfindungsgemäßen Verfahrens werden im Folgenden unter Bezugnahme auf die beigefügten schematischen Figuren beschrieben.

Dort zeigt
- Fig. 1: eine schematische Darstellung eines ersten Ausführungsbeispiels einer erfindungsgemäßen Vorrichtung und
- Fig. 2: eine schematische Darstellung eines zweiten Ausführungsbeispiels einer erfindungsgemäßen Vorrichtung.

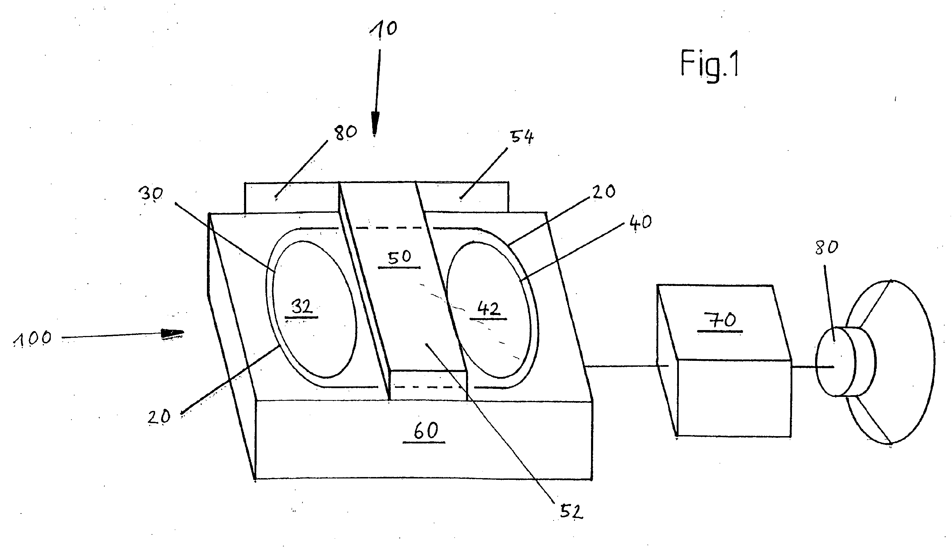

Figur 1 zeigt schematisch eine erfindungsgemäße Vorrichtung 10 mit einem Metalldetektor 100, bei dem in einem Sockel 60 eine Sendespule 20, eine erste Empfangsspule 30 und eine zweite Empfangsspule 40 angeordnet sind. Die Flächenbereiche der ersten Empfangsspule 30 und der zweiten Empfangsspule 40 bilden einen ersten bzw. einen zweiten Trittbereich 32 bzw. 42 für einen ersten bzw. einen zweiten Schuh einer Testperson. Die Sendespule 20 ist dabei so angeordnet, dass der erste Trittbereich 32 und und der zweite Trittbereich 42 im Wesentlichen gleichförmig mit dem Sendesignal beaufschlagt werden, so dass ein Nachweis von objektspezifischen Asymmetrien zwischen den beiden Schuhen durch eine einfache Differenzschaltung der ersten Empfangsspule 30 und der zweiten Empfangsspule 40 erreicht werden kann.

Um ein reproduzierbares Positionieren der Schuhe auf den Trittbereichen 32, 42 des Sockels 60 zu. ermöglichen, sind als Positioniereinrichtung 50 Anschlagselemente 52, 54 im Bereich der Schuhspitzen bzw. zwischen den. Trittbereichen 32, 42 vorgesehen.

Zum Ansteuern der Sendespule 20 und zum Auswerten und Verarbeiten der von den Empfangsspulen 30, 40 nachgewiesenen Sekundärsignale ist eine Steuer- und Verarbeitungseinrichtung 70 vorgesehen. Mit dieser Steuer- und Verarbeitungseinrichtung 70 verbunden ist ein Lautsprecher 80 zum Aussenden eines akustischen Nachweissignals, wenn von dem Metalldetektor 100 ein metallisches Objekt oder zumindest eine objektspezifische Asymmetrie nachgewiesen wurde.

Die erfindungsgemäße Vorrichtung 10 arbeitet wie folgt:

Eine Testperson betritt mit Schuhen den Sockel 60, wobei die Schuhe mit Hilfe der Anschlagselemente 52, 54 bezüglich der Trittbereiche 32, 42 in reproduzierbarer Weise positioniert werden. Sodann wird mit Hilfe der Steuer- und Verarbeitungseinrichtung 70 die Sendespule 20 zum Aussenden eines elektromagnetischen Signals veranlasst. Dieses kann prinzipiell kontinuierlich sein. Bevorzugt wird aber im Pulsverfahren gearbeitet. Das elektromagnetische Sendesignal führt in den untersuchten Objekten, d.h. vorliegend im Bereich des linken und des rechten Schuhs, zur Induktion von Wirbelströmen, die ihrerseits die Abstrahlung von Sekundärsignalen bewirken. Befindet sich nun in einem der Schuhe ein metallisches Objekt; so unterscheiden sich die von dem Bereich des linken und des rechten Schuhs abgegebenen Sekundärsignale sehr deutlich, so dass, wenn die erste Empfangsspule 30 und die zweite Empfängsspule 40 als Differenzmesser geschaltet sind, das Differenzsignal an die Steuer- und Verarbeitungseinrichtung 70 weitergegeben und von dem Lautsprecher 80 ein entsprechendes akustisches Signal abgegeben wird..

Mit einer solchen vergleichsweise einfach aufgebauten Vorrichtung können in Schuhen von Testpersonen verborgene metallische Gegenstände, insbesondere Waffen oder Teile von Waffen, zuverlässig und mit geringem Bedienungsaufwand nachgewiesen werden.

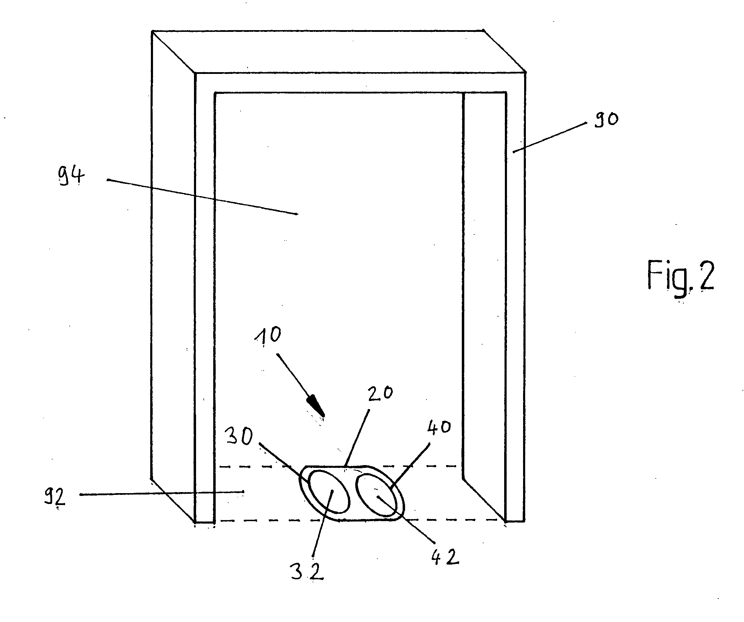

Abbildung 2 zeigt schematisch ein weiteres Ausführungsbeispiel der erfindungsgemäßen Vorrichtung, bei der entsprechende Komponenten mit denselben Bezugszeichen wie in Figur 1 gekennzeichnet sind.

Die erfindungsgemäße Vorrichtung 10 ist im Bodenbereich 92 des Durchgangs 94 einer Torsonde angeordnet. Prinzipiell kann dies auch so erfolgen, dass die erfindungsgemäße Vorrichtung 10 für die Testperson unsichtbar ist.

Bei einer solchen Anordnung kann zum einen mit Hilfe der Torsonde 90 der gesamte Körperbereich der Testperson auf metallische Gegenstände hin abgesucht werden, zum anderen können die Bereiche des linken und rechten Schuhs der Testperson nach objektspezifischen Asymmetrien, insbesondere metallischen Ursprungs, untersucht werden. Da der Metalldetektor 10 prinzipiell von einer bei der Torsonde 90 ohnehin vorhandenen Steuer- und Verarbeitungseinrichtung gesteuert werden kann, ist in diesem Fall für die erfindungsgemäße Vorrichtung 10 keine separate Steuer- und Verarbeitungseinrichtung erforderlich.

## Patentansprüche

1. Vorrichtung zur Detektion metallischer Objekte, insbesondere in Schuhen,
mit mindestens einer Sendespule (20) zum Aussenden eines elektromagnetischen Signals,
mit mindestens einer ersten und einer zweiten Empfangsspule (30, 40) zur Aufnahme von Sekundärsignalen, die von eventuell vorhandenen metallischen Objekten abgegeben werden,
**dadurch gekennzeichnet,**
- **dass** ein Flächenbereich der ersten Empfangsspule einen ersten Trittbereich (32) für einen ersten Schuh einer Person bildet und.
- **dass** ein Flächenbereich der zweiten Empfangsspule einen zweiten Trittbereich (42) für einen zweiten Schuh der Person bildet.

2. Vorrichtung nach Anspruch 1,
**dadurch gekennzeichnet,**
**dass** die Sendespule (20) so angeordnet ist, dass der erste und der zweite Trittbereich (32, 42) gleichförmig: mit dem Sendesignal beaufschlagbar ist.

3. Vorrichtung nach einem der Ansprüche 1 oder 2,
**dadurch gekennzeichnet,**
**dass** die erste Empfangsspule (30) so angeordnet ist, dass von ihr im Wesentlichen Signale aus dem ersten Trittbereich (32) erfassbar sind und/oder dass die zweite Empfangsspule (40) so angeordnet ist, dass von ihr im Wesentlichen Signale aus dem zweiten Trittbereich (42) erfassbar sind.

4. Vorrichtung nach einem der Ansprüche 1 bis 3,
**dadurch gekennzeichnet,**
**dass** die erste und die zweite Empfangsspule (30, 40) zueinander symmetrisch angeordnet sind.

5. Vorrichtung nach einem der Ansprüche 1 bis 4,
**dadurch gekennzeichnet,**
**dass** mindestens zwei der Empfangsspulen (30, 40), insbesondere die erste und die zweite Empfangsspule (30, 40), als Differenzmesser geschaltet sind.

6. Vorrichtung nach einem der Ansprüche 1 bis 5,
**dadurch gekennzeichnet,**
**dass** Asymmetrien metallischen Ursprungs zwischen den beiden Schuhen detektierbar sind.

7. Vorrichtung nach einem der Ansprüche 1 bis 6,
**dadurch gekennzeichnet,**
**dass** die Empfangsspulen (30, 40) und/oder die Sendespulen (20) im Wesentlichen parallel zu den Trittflächen angeordnet sind.

8. Vorrichtung nach einem der Ansprüche 1. bis 7,
**dadurch gekennzeichnet,**
**dass** mindestens eine der Empfangsspulen (30, 40), insbesondere die erste und/oder die zweite Empfangsspule (30, 40), auch als Sendespule schaltbar und einsetzbar ist.

9. Vorrichtung nach einem der Ansprüche 1 bis 8,
**dadurch gekennzeichnet,**
**dass** zur Detektion von Asymmetrien in einem einzelnen Schuh weitere Empfangsspulen vorgesehen sind, die so angeordnet sind, dass Sekundärsignale aus einem Teil-bereich des ersten Trittbereichs (32) oder des zweiten Trittbereichs (42) erfassbar sind.

10. Vorrichtung nach einem der Ansprüche 1 bis 9,
**dadurch gekennzeichnet,**
**dass** mindestens eine weitere Empfangsspule vorgesehen ist, die so angeordnet ist, dass Sekundärsignale aus einem Bereich außerhalb des ersten und des zweiten Trittbereichs (32, 42) erfassbar sind.

11. Vorrichtung nach einem der Ansprüche 1 bis 10,
**dadurch gekennzeichnet,**
**dass** zum reproduzierbaren Positionieren der Schuhe auf den Trittbereichen (32, 42) eine Positioniereinrichtung (50) vorgesehen ist.

12. Vorrichtung nach Anspruch 11,
**dadurch gekennzeichnet,**
**dass** die Positioniereinrichtung (50) als mindestens ein.Anschlagselement (52, 54), insbesondere zwischen den beiden Trittbereichen (32, 42), ausgebildet ist.

13. Vorrichtung nach einem der Ansprüche 1 bis 12,
welche im Bodenbereich (92) eines Durchgangs (94) einer Torsonde (90) angeordnet ist.

14. Verfahren zur Detektion metallischer Objekte, insbesondere in Schuhen,
wobei ein als Differenzmesser arbeitender Metalldetektor (100) mit mindestens einer ersten und. einer zweiten Empfangsspule (30, 40) eingesetzt wird,
**dadurch gekennzeichnet,**
- **dass** eine Trittfläche eines ersten Schuhes einem Flächenbereich der ersten Empfangsspule (30) zugeordnet wird,
- **dass** eine Trittfläche eines zweiten Schuhes einem Flächenbereich der zweiten Empfangsspule (40) zugeordnet wird,
- **dass** von dem ersten Schuh und dem zweiten Schuh ausgesandte Sekundärsignale erfasst und ausgewertet werden.

15. Verfahren nach Anspruch 14,
**dadurch gekennzeichnet,**
**dass** objektspezifische Asymmetrien zwischen den Schuhen, insbesondere metallischen Ursprungs, angezeigt werden.
